(19) **Europäisches Patentamt / European Patent Office / Office européen des brevets**

(11) **EP 2 257 753 B1**

(12) **FASCICULE DE BREVET EUROPEEN**

(45) Date de publication et mention de la délivrance du brevet:
**17.10.2018 Bulletin 2018/42**

(21) Numéro de dépôt: **09720900.1**

(22) Date de dépôt: **19.02.2009**

(51) Int Cl.:
**F27B 13/02** (2006.01)  **F23N 5/24** (2006.01)

(86) Numéro de dépôt international:
**PCT/FR2009/050269**

(87) Numéro de publication internationale:
**WO 2009/112734 (17.09.2009 Gazette 2009/38)**

(54) **PROCEDE DE DETECTION DE CLOISON AU MOINS PARTIELLEMENT BOUCHEE POUR FOUR A CHAMBRES**

VERFAHREN ZUR ERKENNUNG EINES MINDESTENS PARTIELL VERSTOPFTEN BEREICHS IN EINEM KAMMEROFEN

METHOD FOR DETECTING AN AT LEAST PARTIALLY CLOGGED PARTITION IN A CHAMBER OVEN

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **29.02.2008 FR 0851325**

(43) Date de publication de la demande:
**08.12.2010 Bulletin 2010/49**

(73) Titulaire: **Fives Solios**
**78231 Le Pecq (FR)**

(72) Inventeurs:
• **PINONCELY, André**
  **F-69530 Orlienas (FR)**
• **MAHIEU, Pierre**
  **F-69001 Lyon (FR)**

(74) Mandataire: **Cabinet Plasseraud**
**66, rue de la Chaussée d'Antin**
**75440 Paris Cedex 09 (FR)**

(56) Documents cités:
| | |
|---|---|
| EP-A- 0 252 856 | EP-B- 1 070 224 |
| FR-A- 2 600 152 | FR-A- 2 779 811 |
| US-A- 4 284 404 | US-A- 4 354 828 |

EP 2 257 753 B1

**Description**

L'invention concerne le domaine des fours à chambres dits à « feu tournant », pour la cuisson de bloc carbonés, plus particulièrement d'anodes et de cathodes en carbone destinées à la production par électrolyse de l'aluminium et l'invention a plus particulièrement pour objet un procédé de détection du bouchage au moins partiel de cloisons dans un four à chambres.

Des fours à feu tournant pour cuire des anodes sont décrits notamment dans les documents de brevet suivants: US 4,859,175, WO 91/19147, US 6,339, 729, US 6,436,335 et CA 2550880, auxquels on se reportera pour d'avantage de précisions à leur sujet. On rappelle cependant partiellement leur structure et leur fonctionnement, en référence aux figures 1, 2 et 3 ci-après, représentant respectivement une vue schématisée de la structure d'un four à feu(x) tournant(s) et chambres ouvertes, à deux feux dans cet exemple, pour la figure 1, une vue partielle en perspective et coupe transversale avec arrachement représentant la structure interne d'un tel four, pour la figure 2, et une vue en coupe longitudinale d'une cloison conventionnelle d'un tel four pour la figure 3.

EP-B 1 070 224 décrit un procédé de régulation d'un four à feu tournant de cuisson de blocs carbonés.

Le four à cuire (FAC) 1 comprend deux cuvelages ou travées la et lb parallèles, s'étendant selon l'axe longitudinal XX sur la longueur du four et comportant chacun(e) une succession de chambres 2 transversales (perpendiculaires à l'axe XX), séparées les unes des autres par des murs transversaux 3. Chaque chambre 2 est constituée, dans sa longueur, c'est-à-dire dans la direction transversale du four 1, par la juxtaposition, en alternance, d'alvéoles 4, ouverts à leur partie supérieure, pour permettre le chargement des blocs carbonés à cuire et le déchargement des blocs cuits refroidis, et dans lesquels sont empilés les blocs carbonés 5 à cuire noyés dans une poussière carbonée, et des cloisons chauffantes creuses 6, à parois minces, généralement maintenues espacées par des entretoises 6a transversales. Les cloisons creuses 6 d'une chambre 2 sont dans le prolongement longitudinal (parallèle au grand axe XX du four 1) des cloisons creuses 6 des autres chambres 2 de la même travée 1a ou 1b et les cloisons creuses 6 sont en communication les unes avec les autres par des lucarnes 7 à la partie supérieure de leurs parois longitudinales, en regard de passages longitudinaux ménagés à ce niveau dans les murs transversaux 3, de sorte que les cloisons creuses 6 forment des lignes de cloisons longitudinales, disposées parallèlement au grand axe XX du four et dans lesquelles vont circuler des fluides gazeux (air comburant, gaz combustibles et gaz et fumées de combustion) permettant d'assurer la préchauffe et la cuisson des anodes 5, puis leur refroidissement. Les cloisons creuses 6 comportent, en outre, des chicanes 8, pour allonger et répartir plus uniformément le trajet des gaz ou fumées de combustion et ces cloisons creuses 6 sont munies, à leur partie supérieure, d'ouvertures 9, dites « ouvreaux », obturables par des couvercles amovibles et ménagées dans un bloc 9a de couronnement du four 1.

Les deux travées la et lb du four 1 sont mises en communication à leurs extrémités longitudinales par des carneaux de virage 10, qui permettent de transférer les fluides gazeux d'une extrémité de chaque ligne de cloisons creuses 6 d'une travée la ou 1b à l'extrémité de la ligne de cloisons creuses 6 correspondante sur l'autre travée 1b ou la, de sorte à former des boucles sensiblement rectangulaires de lignes de cloisons creuses 6.

Le principe d'exploitation des fours à feu(x) tournant(s), également dénommés fours « à avancement de feu(x) », consiste à amener un front de flammes à se déplacer d'une chambre 2 à une autre qui lui est adjacente au cours d'un cycle, chaque chambre 2 subissant successivement des stades de préchauffage, chauffage forcé, plein feu, puis refroidissement (naturel puis forcé).

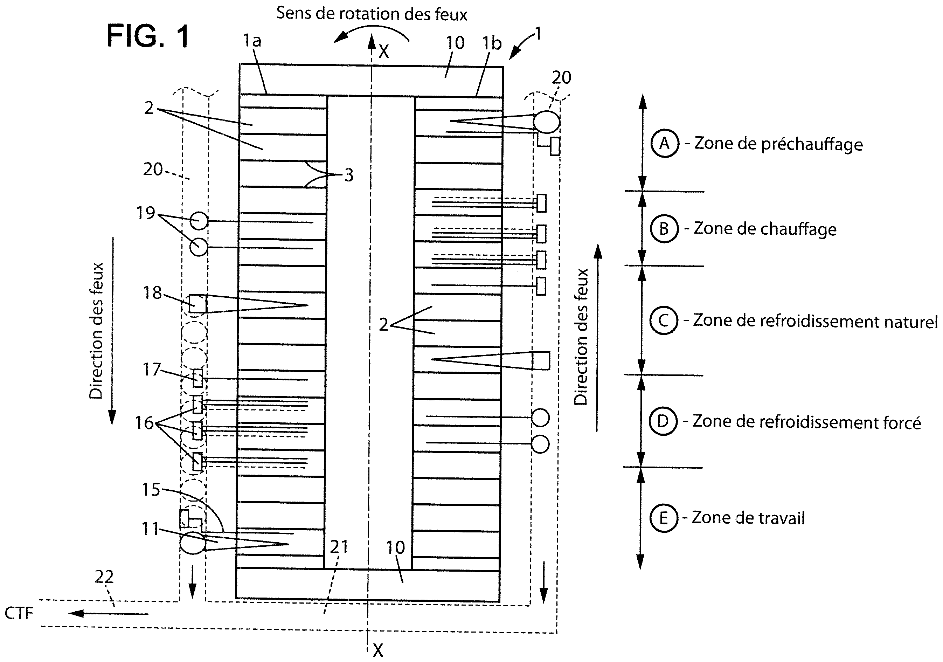

La cuisson des anodes 5 est réalisée par un ou plusieurs feux ou groupes de feux (deux groupes de feux étant représentés sur la figure 1, dans une position dans laquelle l'un s'étend sur treize chambres 2 de la travée 1a et l'autre sur treize chambres 2 de la travée 1b) qui se déplacent cycliquement de chambre 2 en chambre 2. Chaque feu ou groupe de feux est composé de cinq zones successives A à E, qui sont, comme représenté sur la figure 1 pour le feu de la travée 1b, et de l'aval vers l'amont par rapport au sens d'écoulement des fluides gazeux dans les lignes de cloisons creuses 6, et dans le sens contraire aux déplacements cycliques de chambre en chambre :

A) Une zone de préchauffage comportant, en se reportant au feu de la travée la, et en tenant compte du sens de rotation des feux indiqué par la flèche au niveau du carneau de virage 10 à l'extrémité du four 1 en haut sur la figure 1 :

- une rampe d'aspiration 11 équipée, pour chaque cloison creuse 6 de la chambre 2 au-dessus de laquelle cette rampe d'aspiration s'étend, d'un système de mesure et de réglage du débit des gaz et fumées de combustion par ligne de cloisons creuses 6, ce système pouvant comprendre, dans chaque pipe d'aspiration 11a qui est solidaire de la rampe d'aspiration 11 et débouchant dans cette dernière, d'une part, et, d'autre part, engagée dans l'ouverture 9 de l'une respectivement des cloisons creuses 6 de cette chambre 2, un volet d'obturation réglable pivoté par un actionneur de volet, pour le réglage du débit, ainsi qu'un débitmètre 12, légèrement en amont, dans la pipe 11a correspondante, d'un capteur de température (thermocouple) 13 de mesure de la température des fumées de combustion à l'aspiration, une rampe de préchauffage 15, sensiblement parallèle à la rampe d'aspiration 11 au-dessus de la même chambre 2, et équipée de capteurs de température (thermocouples) et de capteurs de pression ;

B) Une zone de chauffage comportant :

- plusieurs rampes de chauffage identiques 16, deux ou, de préférence, trois, comme représenté sur la figure 1 ; chacune équipée de brûleurs et d'injecteurs de combustible (liquide ou gazeux) et de capteurs de température (thermocouples), chacune des rampes 16 s'étendant au-dessus de l'une des chambres respectivement d'un nombre correspondant de chambres 2 adjacentes, de sorte que les injecteurs de chaque rampe de chauffage 16 sont engagés dans les ouvertures 9 des cloisons creuses 6 pour y injecter le combustible ;

C) Une zone de soufflage ou de refroidissement naturel comportant :

- une rampe dite de « point zéro » 17, s'étendant au-dessus de la chambre 2 immédiatement en amont de celle en dessous de la rampe de chauffage 16 la plus en amont, et équipée de capteurs de pression pour mesurer la pression régnant dans chacune des cloisons creuses 6 de cette chambre 2, afin de pouvoir régler cette pression comme indiqué ci-après, et
- une rampe de soufflage 18, équipée de moto ventilateurs munis d'un dispositif permettant le réglage du débit d'air ambiant insufflé dans chacune des cloisons creuses 6 d'une chambre 2 en amont de celle située sous la rampe de point zéro 17, de sorte que les débits d'air ambiant insufflés dans ces cloisons creuses 6 peuvent être régulées de sorte à obtenir une pression voulue (légère surpression ou légère dépression) au niveau de la rampe de point zéro 17 ;

D) Une zone de refroidissement forcé, qui s'étend sur trois chambres 2 en amont de la rampe de soufflage 18, et qui comporte, dans cet exemple, deux rampes de refroidissement 19 parallèles, chacune équipée de moto ventilateurs et de pipes de soufflage insufflant de l'air ambiant dans les cloisons creuses 6 de la chambre 2 correspondante ; et

E) Une zone de travail, s'étendant en amont des rampes de refroidissement 19 et permettant l'enfournement et le défournement des anodes 5, et l'entretien des chambres 2.

Le chauffage du four 1 est ainsi assuré par les rampes de chauffage 16, dont les injecteurs des brûleurs sont introduits, via les ouvertures 9, dans les cloisons creuses 6 des chambres 2 concernées. En amont des rampes de chauffage 16 (par rapport au sens d'avancement du feu et au sens de circulation de l'air et des gaz et fumées de combustion dans les lignes de cloisons creuses 6), la rampe de soufflage 18 et la ou les rampe(s) de refroidissement 19 comportent des pipes d'insufflation d'air de combustion alimentées par les moto ventilateurs, ces pipes étant connectées, via les ouvertures 9, aux cloisons creuses 6 des chambres 2 concernées. En aval des rampes de chauffage 16, on dispose de la rampe d'aspiration 11 pour extraire les gaz et fumées de combustion, désignés dans leur ensemble par les termes « fumées de combustion », qui circulent dans les lignes de cloisons creuses 6.

Le chauffage et la cuisson des anodes 5 sont assurés à la fois par la combustion du combustible (gazeux ou liquide) injecté, de manière contrôlée, par les rampes de chauffage 16, et, dans une mesure sensiblement égale, par la combustion de matières volatiles (telles que des hydrocarbures aromatiques polycycliques) du brai diffusées par les anodes 5 dans les alvéoles 4 des chambres 2 en zones de préchauffage et chauffage, ces matières volatiles, en grande partie combustible, diffusées dans les alvéoles 4 pouvant s'écouler dans les deux cloisons creuses 6 adjacentes par des passages ménagés dans ces cloisons, pour s'enflammer dans ces deux cloisons, grâce à de l'air comburant résiduel présent, à ce niveau, parmi les fumées de combustion dans ces cloisons creuses 6.

Ainsi, la circulation de l'air et des fumées de combustion s'effectue le long des lignes de cloisons creuses 6, et une dépression, imposée en aval de la zone de chauffage B par la rampe d'aspiration 11 à l'extrémité aval de la zone de préchauffage A, permet de contrôler le débit des fumées de combustion à l'intérieur des cloisons creuses 6, tandis que l'air provenant des zones de refroidissement C et D, grâce aux rampes de refroidissement 19 et surtout à la rampe de soufflage 18, est préchauffé dans les cloisons creuses 6, en refroidissant les anodes 5 cuites dans les alvéoles 4 adjacents, au cours de son trajet et sert de comburant lorsqu'il parvient dans la zone de chauffage B.

Au fur et à mesure que la cuisson des anodes 5 se produit, on fait avancer cycliquement (par exemples toutes les 24 heures environ) d'une chambre 2 l'ensemble des rampes 11 à 19 et les équipements et appareillages de mesures et d'enregistrement associés, chaque chambre 2 assurant ainsi, successivement, en amont de la zone de préchauffage A, une fonction de chargement des blocs carbonés crus 5, puis, dans la zone de préchauffage A, une fonction de préchauffage naturel par les fumées de combustion du combustible et des vapeurs de brai qui quittent les alvéoles 4 en pénétrant dans les cloisons creuses 6, compte tenu de la dépression dans les cloisons creuses 6 des chambres 2 en zone de préchauffage A, puis, dans la zone de chauffage B ou de cuisson, une fonction de chauffage des blocs 5 à environ 1100°C, et enfin, dans les zones de refroidissement C et D, une fonction de refroidissement des blocs cuits 5 par l'air ambiant et, corrélativement, de préchauffage de cet air constituant le comburant du four 1, la zone de refroidissement forcé D étant suivie, dans le sens opposé au sens d'avancement du feu et de circulation des fumées de combustion, d'une zone E de déchargement des blocs carbonés 5 refroidis, puis éventuellement de chargement des blocs carbonés crus dans les alvéoles 4.

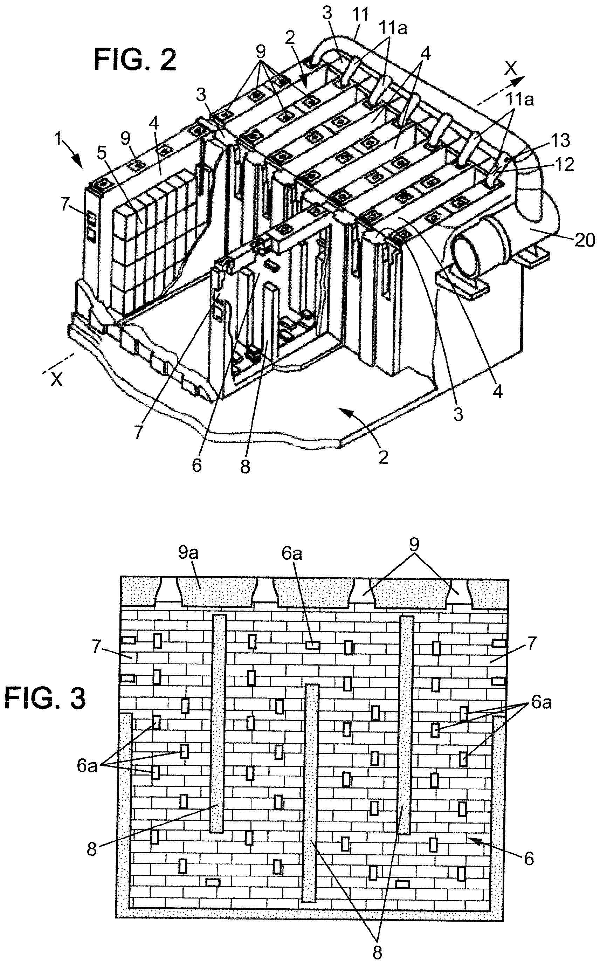

Le procédé de régulation du FAC 1 comprend essentiellement la régulation en température et/ou en pression des zones de préchauffage A, chauffage B et soufflage ou refroidissement naturel C du four 1, ainsi que des étapes de contrôle et de réglage de la combustion par ajustement de l'injection du combustible par les rampes de chauffage 16, ainsi que de la quantité d'air nécessaire, voire de l'optimisation continue de ces paramètres, par exemple en fonction de la teneur en CO ou de l'opacité des fumées de combustion, telle que mesurée dans la rampe d'aspiration 11 (voir figure 2).

Pour assurer la conduite et la surveillance du FAC 1, le système de contrôle commande de ce dernier peut comporter deux niveaux. Le premier peut s'étendre à l'ensemble des rampes 11 à 19, équipées de capteurs et d'actionneurs pilotés par des automates programmables, ainsi qu'à un réseau local d'atelier pour la communication entre les automates, ainsi que pour l'échange de données entre le premier niveau et le second, qui comprend un système central de calculateurs avec leurs équipements périphériques, permettant la communication avec le premier niveau, la supervision de l'ensemble des feux, la régulation centrale du FAC 1, la saisie de lois de consigne, la gestion des historiques des données des cuissons, la gestion des événements, et la mémorisation et l'édition des rapports de fin de cuisson.

Chaque feu est régulé par ligne de cloisons creuses 6 depuis la rampe de soufflage 18 jusqu'à la rampe d'aspiration 11, et, pour chaque ligne de cloisons creuses 6, la régulation est par exemple réalisée par un régulateur de type PID (Proportionnel Intégral et Dérivé).

Les fumées de combustion extraites des feux par les rampes d'aspiration 11 sont collectées dans un conduit des fumées 20, par exemple un conduit cylindrique partiellement représenté sur la figure 2, avec un carneau des fumées 21 pouvant avoir une forme en plan en U (voir en pointillés sur la figure 1) ou pouvant faire le tour du four, et dont la sortie 22 dirige les fumées de combustion aspirées et collectées vers un centre de traitement des fumées (CTF) non représenté car ne faisant pas partie de l'invention.

L'invention concerne un procédé de détection du bouchage au moins partiel de cloison creuse telle que 6. Le bouchage d'au moins une cloison 6 ou une forte obstruction au passage des fumées dans une ou plusieurs cloisons 6 d'une ligne de cloisons peut intervenir principalement dans les situations suivantes:

- infiltration, depuis une alvéole 4 vers une cloison 6 adjacente, et dépôt dans cette cloison 6 de poussière carbonée de garnissage qui enveloppe les anodes 5 dans cette alvéole 4,
- une ou plusieurs entretoises 6a cassées dans une cloison 6 et qui viennent perturber le flux des fumées traversant cette cloison 6,
- mur de cloison 6 déformé et/ou pincé sous l'effet des gradients thermiques successifs, ou
- la combinaison de plusieurs des situations décrites ci-dessus.

Les risques liés à un bouchage au moins partiel de cloison 6 sont importants dans la mesure où, sans détection, le système de régulation des températures continue à injecter du combustible dans les cloisons 6 de la zone de chauffage B alors même que l'air comburant est en défaut du fait du bouchage. Cette situation peut être à l'origine d'explosions.

Une situation de bouchage au moins partiel d'une cloison 6 peut également être dommageable à la qualité de cuisson des anodes 5 présentes non seulement dans une alvéole 4 adjacente à la cloison 6 bouchée, mais également dans les alvéoles 4 amont et aval incluses dans le feu, du fait d'une mauvaise circulation des fumées et donc d'un échange thermique dégradé entre les fumées et la ou les cloisons 6.

Le contrôle du débit dans une cloison 6 est effectué soit par une mesure de la dépression statique dans la partie inférieure d'un ouvreau 9 et/ou dans la pipe d'aspiration 11a correspondante de la rampe d'aspiration 11, soit par une mesure de débit, par exemple de type déprimogène tel que tube à Venturi, tube de Pitot, diaphragme, cône, etc. située dans la pipe d'aspiration 11a de la rampe d'aspiration 11. La mesure de la dépression statique est représentative du débit dans le cas d'un écoulement stable. Dans une situation de bouchage au moins partiel d'une cloison 6, le débit des fumées a tendance à diminuer, mais à l'inverse, la dépression statique augmente, inversant la corrélation naturelle des ces deux variables.

La mesure de débit, effectuée par un débitmètre 12 dans la pipe d'aspiration 11a correspondante, permet de quantifier l'écoulement des fumées en provenance de chaque cloison 6. Dans une situation de bouchage au moins partiel d'une cloison 6, du fait de l'augmentation de la dépression statique, de nombreuses infiltrations d'air ont lieu, notamment en provenance du sommet du four 1 et/ou de la première section en amont du feu et/ou de la pipe d'aspiration 11a correspondante, compensant en partie la diminution du débit des fumées traversant la cloison 6 et générant ainsi un écart entre le débit des fumées diluées par ces infiltrations d'air, et tel que mesuré dans la pipe 11a, et le débit des fumées qui traversent réellement la cloison 6. Cet écart peut, dans certains cas, être significatif et masquer une baisse importante du débit dans la cloison 6. Pour cette raison, il a été avéré expérimentalement que la seule mesure du débit des fumées diluées tel que mesuré dans la pipe 11a ne pouvait suffire à détecter de façon fiable une situation de bouchage au moins partiel d'une cloison 6.

Le problème à la base de l'invention est de remédier aux inconvénients précités, par un procédé de détection du bouchage au moins partiel de cloison, pouvant avantageusement être mis en oeuvre par un système d'analyse en temps réel des mesures effectuées dans la zone de préchauffage A, et qui permet d'identifier de manière certaine les situations de bouchage des cloisons, sans nécessité d'appareillage ou d'instrumentation de mesure supplémentaire, et sans générer en contrepartie de fausses alarmes susceptibles de perturber inutilement le fonctionnement du four..

A cet effet, l'invention propose un procédé de détection du bouchage au moins partiel d'au moins une cloison creuse d'un four à chambres du type dit « à feu tournant », et qui se caractérise en ce qu'il comprend au moins les étapes consistant à :

- définir une variable $R_x$ représentative du débit des fumées dans une cloison creuse de rang x parmi les cloisons d'une chambre du four,
- définir un intervalle de confiance de la population des variables R d'au moins plusieurs des cloisons de rang 1 à n de ladite chambre en excluant $R_x$, à partir d'une moyenne m et d'un écart type σ desdites variables R,
- vérifier, à des instants successifs, et de préférence en continu, si la variable $R_x$ est en dehors dudit intervalle de confiance, et exclusivement par valeur inférieure, et, dans l'affirmative,
- délivrer un signal d'alarme témoignant d'un bouchage au moins partiel d'au moins une cloison creuse de la ligne de cloisons à laquelle appartient ladite cloison de rang x par rapport aux autres cloisons, et/ou commander au moins une modification du réglage du fonctionnement du four,

et en ce que la variable $R_x$ représentative du débit des fumées pour la cloison de rang x est définie comme une combinaison de trois mesures effectuées dans la zone de préchauffage A du four, et qui sont le débit $Q_x$ et la température $T_x$ des fumées et la dépression statique $P_x$ pour ladite cloison de rang x.

En particulier, la variable $R_x$ est avantageusement définie, selon l'invention, par la formule : $R_x = Q_x^\alpha * T_x^\beta / P_x^\chi$, où α, β, χ sont des coefficients de pondération des mesures.

De manière pratique, le choix des coefficients de pondération α, β et χ peut être effectué par comparaison des écarts significatifs d'un bouchage avec des échelles de mesure de chacune respectivement des grandeurs débit Q, température T et dépression statique P.

Ainsi, à partir de données obtenues sur plusieurs fours, les coefficients de pondération α, β et χ peuvent être avantageusement choisis dans les plages suivantes : α de 0,3 à 0,5, β de 1 à 1,5, et χ de 0,3 à 0,5.

Pour être représentatif d'une situation de bouchage au moins partiel de cloison 6, le procédé de l'invention est tel qu'il comprend une étape consistant à définir, comme condition de bouchage au moins partiel de la cloison de rang x de ladite chambre, la condition dans laquelle la valeur $C_x$ est négative, où $C_x = R_x - [k*m(R_1...R_{x-1}, R_{x+1}...R_n) - p*\sigma(R_1...R_{x-1}, R_{x+1}...R_n)]$, où k est un coefficient d'ajustement de détection, dont la valeur est choisie de 0,8 à 1, m est la moyenne des variables R en excluant $R_x$, n est le nombre total de cloisons d'une chambre, et p est le nombre d'écarts types autour de la moyenne m, p étant un nombre entier naturel choisi supérieur ou égal à 3, et de préférence inférieur ou égal à 6.

On peut ainsi vérifier, par cette condition, que la variable $R_x$ de la cloison de rang x est hors de l'intervalle de confiance de la population des variables R des cloisons de rang 1 à n en excluant $R_x$, et, qui plus est, par valeur exclusivement inférieure, ce qui met en évidence une situation anormale de la cloison de rang x par rapport à la population des autres cloisons.

En cas de détection, et alternativement ou cumulativement à la délivrance d'un signal d'alarme aux opérateurs du four, un système d'analyse des données résultant de la mise en oeuvre du procédé de l'invention peut commander des modifications de réglage du fonctionnement du four, selon la gravité du bouchage détecté, et jusqu'à ce que des opérations de maintenance se déroulent sur la ou les cloisons concernées par le ou les bouchages détectés.

Selon l'invention, de telles modifications du réglage du fonctionnement du four peuvent consister en une régulation d'au moins une rampe de chauffage dans la zone de chauffage B du four en mode de limitation ou d'arrêt d'injection de combustible par ladite rampe de chauffage, et/ou en régulation de la rampe d'aspiration dans la zone d'aspiration A du four en mode de tirage maximal par ladite rampe d'aspiration, et/ou en régulation d'au moins une rampe de refroidissement de la zone de refroidissement forcé D du four et/ou de la rampe de soufflage de la zone de refroidissement naturel C du four en mode de soufflage maximal de l'une au moins desdites rampes de refroidissement et de soufflage, et/ou encore en toute autre disposition ou action sur l'une au moins des différentes rampes du four visant à réduire le risque d'explosion lié à une situation de bouchage de cloison.

D'autres caractéristiques et avantages de l'invention ressortiront de la description donnée ci-dessous à titre non limitatif, d'un exemple de réalisation décrit en référence aux dessins annexés sur lesquels :

- la figure 1 est une vue en plan schématisé de la structure d'un four à feux tournants et chambres ouvertes, à deux feux dans cet exemple ;
- la figure 2 est une vue partielle en perspective et coupe transversale avec arrachement représentant la structure interne d'un tel four,
- la figure 3 est une vue en coupe longitudinale d'une cloison creuse conventionnelle d'un tel four, ces figures 1 à 3 ayant déjà été décrites ci-dessus, et

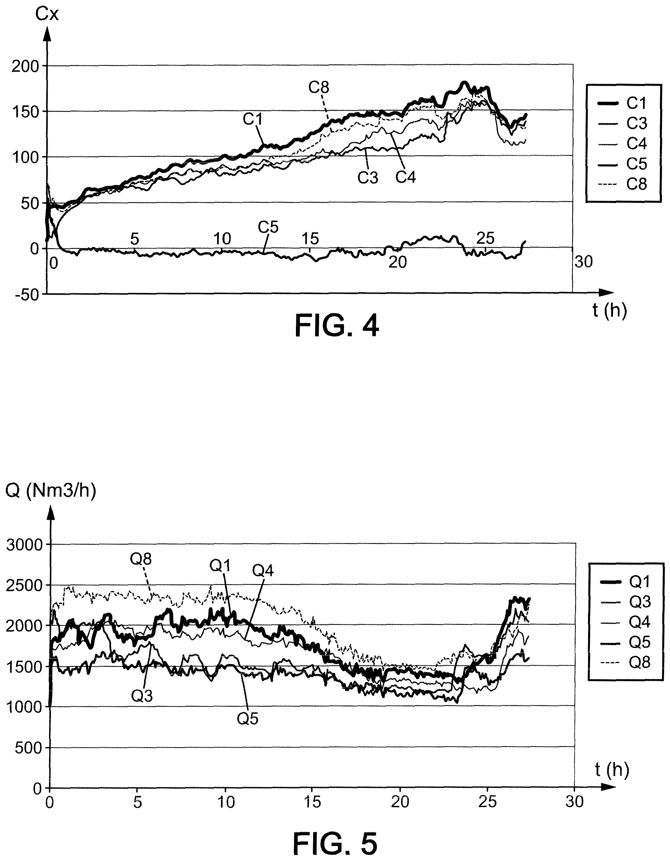

- les figures 4 et 5 sont des courbes caractéristiques représentant respectivement, en fonction du temps (exprimé en heure) dans le cycle de cuisson, la valeur $C_x$ et le débit Q des fumées, pour cinq des huit cloisons creuses d'une même chambre du four, sous la rampe d'aspiration 11 dans la zone de préchauffage A du four, et de rang 1, 3, 4, 5 et 8, pour lesquelles les courbes caractéristiques sont repérées C1, C3, C4, C5 et C8, pour la figure 4, et Q1, Q3, Q4, Q5 et Q8 pour la figure 5.

Le procédé de détection selon l'invention est mis en oeuvre sur un four tel que représenté sur les figures 1 à 3, décrites ci-dessus, et à l'aide d'un système d'analyse de données qui est basé sur la théorie statistique de la distribution normale gaussienne. Pour une telle distribution, il est connu que 99,73 % d'une population se trouve dans un intervalle [m−3σ, m+3σ], et que 99,99% de cette population est dans un autre intervalle [m−6σ, m+6σ], où m représente une moyenne et σ un écart type.

Bien que la distribution des données opératoires sur l'ensemble des cloisons de rang 1 à n, n'ait aucune raison particulière d'obéir à une loi normale gaussienne, il a été démontré expérimentalement que l'usage de ce modèle statistique tel que détaillé ci-après, conduit à un procédé de détection de bouchage de cloison à la fois efficace et fiable. Ainsi sur une période d'observation confidentielle de 3 mois sur un site pilote industriel, le procédé a pu détecter la totalité des situations avérées de bouchage total ou partiel de cloison et n'a généré en contrepartie qu'une seule fausse alarme.

En se basant donc sur une telle distribution gaussienne, le procédé selon l'invention, pour la détection du bouchage au moins partiel d'au moins une cloison creuse 6 d'un four 1 à chambres 2, du type dit « à feu tournant », comprend une étape consistant à définir un intervalle de confiance d'une variable $R_x$, définie elle-même comme représentative du débit des fumées dans une cloison 6 de rang x parmi les cloisons de rang 1 à n d'une même chambre 2 du four 1, qui est la chambre 2 située sous la rampe d'aspiration 11 dans la zone de préchauffage A d'au moins un feu, et de préférence de chaque feu du four 1, pour permettre l'identification d'une situation de bouchage d'au moins une cloison 6, si la variable $R_x$ représentative du débit des fumées pour cette cloison 6 de rang x est hors de l'intervalle de confiance de la population des variables R des cloisons 6 de rang 1 à n en excluant $R_x$, cet intervalle étant défini à partir d'une moyenne m et d'un écart type σ desdites variables.

Selon l'invention, la variable représentative R est une combinaison des trois mesures effectuées dans la zone de préchauffage A, par exemple à l'aide du débitmètre 12 et du capteur de température (thermocouple) 13 disposés dans chacune des pipes d'aspiration 11a reliant la rampe d'aspiration 11 à respectivement l'une des cloisons creuses 6 de cette chambre 2 au travers de l'ouverture ou ouvreau 9 le plus en aval, dans le sens de la circulation des fumées, pour chacune des ces cloisons creuses 6. Ces trois mesures sont le débit Q et la température T des fumées, ainsi que la dépression statique P dans la cloison 6 considérée.

Dans le cas d'un bouchage d'une cloison 6 de la chambre 2, en communication avec la rampe d'aspiration 11 d'un feu, ou du bouchage d'une au moins des cloisons 6 d'une ligne de cloisons à laquelle appartient la cloison 6 considérée de la chambre 2, on observe que le débit Q et la température T des fumées tendent à diminuer, alors que la dépression statique P tend à augmenter, comme déjà expliqué ci-dessus.

Pour cette raison, en définissant la variable $R_x$, représentative du débit des fumées pour la cloison 6 de rang x, par la formule suivante : $R_x = Q^\alpha_x * T^\beta_x / P^\chi_x$, où $\alpha$, $\beta$ et $\chi$ sont des coefficients de pondération des mesures qui sont positifs, on comprend que la variable $R_x$ d'une cloison 6 de rang x en situation de bouchage est très nettement diminuée par rapport aux variables R représentatives du débit des fumées des autres cloisons 6 de la même chambre 2. Selon l'invention, on définit comme condition représentative d'une situation anormale dans la cloison 6 de rang x, le fait qu'une variable $C_x$ soit négative, cette variable $C_x$ étant définie par la formule suivante :

$$C_x = R_x - [k*m(R1\ldots R_{x-1}, R_{x+1}\ldots R_n) - p*\sigma(R_1\ldots R_{x-1}, R_{x+1}\ldots R_n)],$$

où

- $R_x$ est la variable représentative du débit des fumées pour la cloison 6 de rang x de la chambre 2 reliée à la rampe d'aspiration 11 ;
- k est un coefficient d'ajustement du test de détection, et peut varier de 0,8 à 1,

- n est le nombre total de cloisons 6 de chambre 2 du four 1 ;
- m est la moyenne des variables représentatives R à l'exclusion de $R_x$,
- σ est l'écart type ;
- p est un nombre entier naturel d'écarts types autour de la moyenne m et choisi supérieur ou égal à 3, et de préférence inférieur ou égal à 6.

Par cette condition, on vérifie donc que la variable $R_x$ représentative du débit des fumées pour la cloison 6 de rang x est en dehors de l'intervalle de confiance de la population des variables R des cloisons 6 de rang 1 à n de cette chambre 2 en excluant $R_x$, et, qui plus est, par valeur exclusivement inférieure, et on met ainsi en évidence une situation anormale de la cloison 6 de rang x par rapport à la population des autres cloisons 6 de cette même chambre 2, ce qui témoigne d'un bouchage au moins partiel d'au moins une cloison creuse 6 de la ligne de cloisons qui comprend cette cloison 6 de rang x.

Le choix des coefficients de pondération α, β et χ des mesures respectivement de Q, T, et P, peut se faire de manière empirique, en comparant les écarts significatifs d'un bouchage de cloison 6 avec les échelles de mesures respectivement de chacune des variables Q, T et P.

Ainsi, à partir des données provenant de plusieurs fours différents de ce même type, des plages de coefficients ont été déterminées de sorte que α varie de 0,3 à 0,5, β de 1 à 1,5 et χ et 0,3 à 0,5.

Ainsi, le procédé de l'invention peut être mis en oeuvre à l'aide d'une analyse statistique des données, et en particulier de la variable $R_x$, qui présente, en outre l'avantage de s'effectuer au fil du temps, de sorte qu'une historisation des données n'est pas nécessaire.

De ce fait, les calculs statistiques à effectuer pour mettre en oeuvre le procédé de l'invention sont accessibles au système de contrôle-commande du four 1, et en particulier à son système d'automatisation embarqué sur les équipements du four 1, sans nécessiter d'interface avec un autre niveau de traitement des données ou de supervision, en garantissant ainsi une sécurité de fonctionnement intrinsèque.

De plus, comme l'analyse des données mettant en oeuvre le procédé de l'invention s'effectue par comparaison des variables $R_x$ entre elles à un instant donné, le procédé de détection proposé est indépendant du réglage du procédé de cuisson du four 1 et de l'évolution des variables de cuisson au cours du cycle de cuisson.

En cas de détection d'un bouchage de cloison 6, le système de contrôle-commande du four 1 peut délivrer un signal d'alarme, avantageusement sous la forme d'un message d'alarme pour avertir les opérateurs du four. Mais, alternativement ou cumulativement, et selon la gravité du bouchage détecté, le système de contrôle-commande du four peut commander des modifications de la régulation du procédé de cuisson, et, plus généralement, de fonctionnement du four, jusqu'à ce que des opérations de maintenance ou réparation puissent être effectuées sur la ou les cloisons 6 concernées par un bouchage.

De telles modifications peuvent porter sur la régulation des rampes de chauffage 16 dans la zone de chauffage B, en mode de limitation ou d'arrêt de l'injection du combustible par ces rampes 16 et/ou encore sur la régulation de la rampe d'aspiration 11 dans le zone de préchauffage A, en mode de tirage (ou d'aspiration) maximal des fumées par cette rampe d'aspiration 11, et/ou sur la régulation des rampes de refroidissement 19 dans la zone de refroidissement forcé D et/ou de la rampe de soufflage 18 dans la zone de refroidissement naturel C du four, en mode de soufflage maximal de l'une au moins de ces rampes 19 et 18, et/ou encore par toute autre disposition ou action visant, sur le four 1, à réduire le risque d'explosion lié à une situation de bouchage d'une cloison 6.

Les figures 4 et 5 représentent respectivement des courbes caractéristiques de la variable $C_x$ et du débit des fumées Q exprimé en $Nm^3$ par heure, en fonction du temps exprimé en heure, au cours d'un cycle de cuisson d'une durée d'environ 27 heures, pour cinq cloisons creuses 6 seulement parmi les huit cloisons creuses par chambre 2 du four 1. Cette représentation partielle des résultats de cinq cloisons seulement sur huit dans les figures 4 et 5 n'est due qu'à un souci de clarté de l'exemple fourni, mais la totalité des huit cloisons par chambre 2 du four 1 ont bien été prises en compte lors des essais confidentiels de détection du bouchage de la cloison de rang 5.

Les courbes de débit de la figure 5 montrent que le débit Q5 de la cloison partiellement bouchée est sensiblement inférieur aux débits Q1, Q4 et Q8 des cloisons de rang 1, 4 et 8, mais ne se différencie pas suffisamment du débit Q3 de la cloison de rang 3 pour permettre d'identifier clairement et de façon certaine une situation anormale de bouchage de cloison. En contrepartie, le calcul de la variable $C_x$ pour la cloison de rang 5, en appliquant le procédé de l'invention, donne la courbe C5 de la figure 4, qui demeure négative sur la quasi totalité du cycle de cuisson, alors que les valeurs C1, C3, C4 et C8 calculées selon le procédé de l'invention pour les quatre cloisons de rangs 1, 3, 4 et 8 sont très positives et assez regroupées les unes des autres, ce qui témoigne incontestablement d'une situation anormale pour la cloison de rang 5.

Les calculs et traitements de données nécessaires à la détermination des $C_x$, sont effectués par des programmes qui peuvent chargés dans certains des automates programmables reliés aux capteurs de température, de débit et de pression de la rampe d'aspiration 11 notamment, et pilotant des actionneurs correspondants, tels que volets de réglage de débit, comme mentionné ci-dessus.

**Revendications**

1.  Procédé de détection du bouchage au moins partiel d'au moins une cloison creuse (6) d'un four (1) à chambres (2) du type dit « à feu tournant », **caractérisé en ce qu'**il comprend au moins les étapes consistant à :

    - définir une variable $R_x$ représentative du débit des fumées dans une cloison creuse (6) de rang x parmi les cloisons (6) d'une chambre (2) du four (1),
    - définir un intervalle de confiance de la population des variables R d'au moins plusieurs des cloisons (6) de rang 1 à n de ladite chambre (2) en excluant $R_x$ à partir d'une moyenne m et d'un écart type σ desdites variables R,
    - vérifier, à des instants successifs, et de préférence en continu, si la variable $R_x$ est en dehors dudit intervalle de confiance, et exclusivement par valeur inférieure, et, dans l'affirmative,
    - délivrer un signal d'alarme témoignant d'un bouchage au moins partiel d'au moins une cloison creuse (6) de la ligne de cloisons (6) à laquelle appartient ladite cloison (6) de rang x par rapport aux autres cloisons (6), et/ou commander au moins une modification du réglage du fonctionnement du four (1),

    et **en ce que** la variable $R_x$ représentative du débit des fumées pour la cloison (6) de rang x est définie comme une combinaison de trois mesures effectuées dans la zone de préchauffage (A) du four (1), et qui sont le débit $Q_x$ et la température $T_x$ des fumées et la dépression statique $P_x$ pour ladite cloison (6) de rang x.

2.  Procédé selon la revendication 1, **caractérisé en ce que** ladite variable $R_x$ est définie par la formule : $R_x = Q^{\alpha}_x * T^{\beta}_x / P^{\chi}_x$, où $\alpha$, $\beta$, $\chi$ sont des coefficients de pondération des mesures.

3.  Procédé selon la revendication 2, **caractérisé en ce que** le choix des coefficients de pondération $\alpha$, $\beta$, $\chi$ est effectué par comparaison des écarts significatifs d'un bouchage avec des échelles de mesure de chacune respectivement des grandeurs débit Q, température T et dépression statique P.

4.  Procédé selon la revendication 3, **caractérisé en ce que** les coefficients de pondération $\alpha$, $\beta$, $\chi$ sont choisis dans les plages suivantes : $\alpha$ de 0,3 à 0,5, $\beta$ de 1 à 1,5, et $\chi$ de 0,3 à 0,5.

5.  Procédé selon l'une quelconque des revendications 2 à 4, **caractérisé en ce qu'**il comprend une étape consistant à définir, comme condition de bouchage au moins partiel de la cloison (6) de rang x de ladite chambre (2), la condition dans laquelle la valeur $C_x$ est négative, où $C_x = R_x - [k*m(R_1...R_{x-1}, R_{x+1}... R_n) - p*\sigma(R_1...R_{x-1}, R_{x+1}...R_n)]$, où k est un coefficient d'ajustement de détection, dont la valeur est choisie de 0,8 à 1, m est la moyenne des variables R en excluant $R_x$, n est le nombre total de cloisons (6) d'une chambre (2), et p est le nombre d'écarts types autour de la moyenne m, p étant un nombre entier naturel choisi supérieur ou égal à 3, et de préférence inférieur ou égal à 6.

6.  Procédé selon l'une quelconque des revendications 1 à 5, **caractérisé en ce qu'**en cas de détection d'un bouchage au moins partiel d'au moins une cloison (6) de la ligne de cloisons (6) comprenant la cloison de rang x de la chambre (2), s'étendant dans la zone de préchauffage (A) du four (1) sous une rampe d'aspiration (11), on commande au moins une modification du réglage du fonctionnement du four (1) par la régulation d'au moins une rampe de chauffage (16) dans la zone de chauffage (B) du four (1) en mode de limitation ou d'arrêt d'injection de combustible par ladite rampe de chauffage (16).

7.  Procédé selon l'une quelconque des revendications 1 à 6, **caractérisé en ce qu'**en cas de détection d'un bouchage au moins partiel d'au moins une cloison (6) de la ligne de cloisons (6) comprenant la cloison de rang x de la chambre (2), s'étendant dans la zone de préchauffage (A) du four (1) sous une rampe d'aspiration (11), on commande une régulation de la rampe d'aspiration (11) en mode de tirage maximal par ladite rampe (11).

8.  Procédé selon l'une quelconque des revendications 1 à 7, **caractérisé en ce qu'**en cas de détection d'un bouchage au moins partiel d'au moins une cloison (6) de la ligne de cloisons (6) comprenant la cloison de rang x de la chambre (2), s'étendant dans la zone de préchauffage (A) du four (1) sous une rampe d'aspiration (11), on commande un régulation par l'une au moins des rampes de refroidissement (19) dans la zone de refroidissement forcé (D) et/ou par la rampe de soufflage (18) dans la zone de refroidissement naturel (C) du four (1) en mode de soufflage maximal par l'une au moins desdites rampes de refroidissement (19) et de soufflage (18).

**Patentansprüche**

1.  Verfahren zur Erkennung der mindestens partiellen Verstopfung mindestens einer Hohlwand (6) eines Ofens (1) mit Kammern (2) der als "Ringkammerofen" bezeichneten Art, **dadurch gekennzeichnet, dass** es mindestens die aus Folgendem bestehenden Schritte umfasst:

    - Definieren einer Variable $R_x$, die für den Rauchgasdurchsatz in einer Hohlwand (6) der Reihe x unter den Wänden (6) einer Kammer (2) des Ofens (1) steht,
    - Definieren eines Vertrauensintervalls der Grundgesamtheit der Variablen R von mindestens mehreren der Wände (6) der Reihe 1 bis n der Kammer (2) unter Ausschluss von $R_x$ anhand eines Mittelwerts m und einer Standardabweichung $\sigma$ der Variablen R,
    - Überprüfen zu aufeinanderfolgenden Zeitpunkten und vorzugsweise kontinuierlich, ob die Variable $R_x$ außerhalb des Vertrauensintervalls ist, und zwar allein durch niedrigeren Wert, und wenn ja:
    - Bereitstellen eines Alarmsignals, das eine mindestens partielle Verstopfung mindestens einer Hohlwand (6) der Zeile von Wänden (6), zu der die Wand (6) der Reihe x in Bezug auf die anderen Wände (6) gehört, anzeigt, und/oder Steuern mindestens einer Änderung der Betriebseinstellung des Ofens (1),

    und dadurch, dass die Variable $R_x$, die für den Rauchgasdurchsatz für die Wand (6) der Reihe x steht, als eine Kombination von drei Messungen, die in der Vorheizzone (A) des Ofens (1) durchgeführt werden und die der Durchsatz $Q_x$ und die Temperatur $T_x$ der Rauchgase sowie der statische Unterdruck $P_x$ für die Wand (6) der Reihe x sind, definiert ist.

2.  Verfahren nach Anspruch 1, **dadurch gekennzeichnet, dass** die Variable $R_x$ durch die folgende Formel definiert ist: $R_x = Q^\alpha_x * T^\beta_x / P^\chi_x$, wobei $\alpha$, $\beta$ und $\chi$ Gewichtungskoeffizienten der Messungen sind.

3.  Verfahren nach Anspruch 2, **dadurch gekennzeichnet, dass** die Wahl der Gewichtungskoeffizienten $\alpha$, $\beta$ und $\chi$ durch Abgleich der signifikanten Abweichungen einer Verstopfung mit Messskalen jeder der Größen Durchsatz Q, Temperatur T und statischer Unterdruck P erfolgt.

4.  Verfahren nach Anspruch 3, **dadurch gekennzeichnet, dass** die Gewichtungskoeffizienten $\alpha$, $\beta$ und $\chi$ aus den folgenden Bereichen ausgewählt sind: $\alpha$ von 0,3 bis 0,5, $\beta$ von 1 bis 1,5 und $\chi$ von 0,3 bis 0,5.

5.  Verfahren nach einem der Ansprüche 2 bis 4, **dadurch gekennzeichnet, dass** es einen Schritt umfasst, der darin besteht, als Bedingung einer mindestens partiellen Verstopfung der Wand (6) der Reihe x der Kammer (2) die Bedingung zu definieren, unter welcher der Wert $C_x$ negativ ist, wobei $C_x = R_x - [k * m (R1...R_{x-1}, R_{x+1}...R_n)-p * \sigma (R_1...R_{x-1}, R_{x+1}...R_n)]$, wobei k ein Erkennungsanpassungskoeffizient ist, dessen Wert von 0,8 bis 1 gewählt ist, m der Mittelwert der Variablen R unter Ausschluss von $R_x$ ist, n die Gesamtzahl der Wände (6) einer Kammer (2) ist und p die Anzahl der Standardabweichungen um den Mittelwert m ist, wobei p eine natürliche ganze Zahl größer als oder gleich 3 und vorzugsweise größer als oder gleich 6 ist.

6.  Verfahren nach einem der Ansprüche 1 bis 5, **dadurch gekennzeichnet, dass** im Fall der Erkennung einer mindestens partiellen Verstopfung mindestens einer Wand (6) der Zeile von Wänden (6), welche die Wand der Reihe x der Kammer (2) umfasst, die sich in der Vorheizzone (A) des Ofens (1) unter einer Ansaugrampe (11) erstreckt, mindestens eine Änderung der Betriebseinstellung des Ofens (1) bewirkt wird, indem mindestens eine Heizrampe (16) in der Heizzone (B) des Ofens (1) in den Begrenzungs- oder Unterbrechungsmodus der Brennstoffeinspritzung über die Heizrampe (16) versetzt wird.

7.  Verfahren nach einem der Ansprüche 1 bis 6, **dadurch gekennzeichnet, dass** im Fall der Erkennung einer mindestens partiellen Verstopfung mindestens einer Wand (6) der Zeile von Wänden (6), welche die Wand der Reihe x der Kammer (2) umfasst, die sich in der Vorheizzone (A) des Ofens (1) unter einer Ansaugrampe (11) erstreckt, eine Einstellung der Ansaugrampe (11) in den Maximalzugmodus über die Rampe (11) bewirkt wird.

8.  Verfahren nach einem der Ansprüche 1 bis 7, **dadurch gekennzeichnet, dass** im Fall der Erkennung einer mindestens partiellen Verstopfung mindestens einer Wand (6) der Zeile von Wänden (6), welche die Wand der Reihe x der Kammer (2) umfasst, die sich in der Vorheizzone (A) des Ofens (1) unter einer Ansaugrampe (11) befindet, über mindestens eine der Abkühlrampen (19) in der Zone (D) zur Zwangskühlung und/oder über die Blasrampe (18) in der Zone (C) zur natürlichen Kühlung eine Einstellung des Ofens (1) in den Maximalblasmodus über mindestens eine der Abkühl- (19) und der Blasrampe (18) bewirkt wird.

**Claims**

1. A method for detecting an at least partial clogging of at least one hollow partition (6) of a multi-chamber (2) furnace (1) referred to as a "ring" furnace, **characterized in that** it comprises at least the steps consisting of:

   - defining a variable $R_x$ representative of the flow rate of the gases in a hollow partition (6) of rank x among the partitions (6) of a chamber (2) of the furnace (1),
   - defining a confidence interval for the population of variables R of at least several partitions (6) of rank 1 to n of said chamber (2) while excluding $R_x$, based on a mean m and a standard deviation $\sigma$ for said variables R,
   - checking at successive moments, and preferably continuously, whether the variable $R_x$ is outside said confidence interval by a lower value, and if so,
   - issuing an alarm signal indicating an at least partial clogging of at least one hollow partition (6) of the row of partitions (6) to which belongs said partition (6) of rank x relative to the other partitions (6), and/or ordering at least one modification to the operating settings of the furnace (1),

   and **in that** the variable $R_x$ representative of the flow rate of the gases for the rank x partition (6) is defined as a combination of three measurements made in the preheating zone (A) of the furnace (1), and which are the flow rate $Q_x$ and temperature $T_x$ of the gases and the negative static pressure $P_x$ for said rank x partition (6).

2. A method according to claim 1, **characterized in that** said variable $R_x$ is defined by the formula: $R_x = Q^{\alpha}_x * T^{\beta}_x / P^{\chi}_x$, where $\alpha$, $\beta$, and $\chi$ are weighting factors for the measurements.

3. A method according to claim 2, **characterized in that** the weighting factors $\alpha$, $\beta$, $\chi$ are chosen made by comparing the statistically significant differences for a clog with the respective measurement scales for the flow rate Q, temperature T, and negative static pressure P.

4. A method according to claim 3, **characterized in that** the weighting factors $\alpha$, $\beta$, $\chi$ are chosen within the following ranges: $\alpha$ from 0.3 to 0.5, $\beta$ from 1 to 1.5, and $\chi$ from 0.3 to 0.5.

5. A method according to any of claims 2 to 4, **characterized in that** it comprises a step consisting of defining, as a condition of an at least partial clogging of the rank x partition (6) of said chamber (2), the condition in which the value $C_x$ is negative, where $C_x = R_x - [k*m(R_1...R_{x-1}, R_{x+1}...R_n) - p*\sigma(R_1...R_{x-1}, R_{x+1}...R_n)]$, where k is a detection adjustment coefficient of a value selected between 0.8 and 1, m is the mean of the variables R excluding $R_x$, n is the total number of partitions (6) of a chamber (2), and p is the number of standard deviations from the mean m, p being a natural whole number chosen to be greater than or equal to 3, and preferably less than or equal to 6.

6. A method according to any one of claims 1 to 5, **characterized in that** if an at least partial clogging is detected of at least one partition (6) of the row of partitions (6) comprising the rank x partition of the chamber (2), extending into the preheating zone (A) of the furnace (1) under an exhaust manifold (11), at least one modification to the operating settings of the furnace (1) is ordered by setting at least one heating line (16) in the heating zone (B) of the furnace (1) into a mode in which the fuel injection by said heating line (16) is stopped or limited.

7. A method according to any one of claims 1 to 6, **characterized in that** if an at least partial clogging is detected of at least one partition (6) of the row of partitions (6) comprising the rank x partition of the chamber (2), extending into the preheating zone (A) of the furnace (1) under an exhaust manifold (11), a setting of the exhaust manifold (11) into maximum drawing mode by said manifold is ordered.

8. A method according to any one of claims 1 to 7, **characterized in that** if an at least partial clogging is detected of at least one partition (6) of the row of partitions (6) comprising the rank x partition of the chamber (2), extending into the preheating zone (A) of the furnace (1) under an exhaust manifold (11), at least one of the cooling lines (19) in the forced cooling zone (D) and/or the blowing line (18) in the natural cooling zone (C) of the furnace (1), is ordered into a mode of maximum blowing by at least one of said cooling (19) and blowing (18) lines.

FIG. 1

Sens de rotation des feux

Direction des feux

Direction des feux

(A) - Zone de préchauffage

(B) - Zone de chauffage

(C) - Zone de refroidissement naturel

(D) - Zone de refroidissement forcé

(E) - Zone de travail

CTF

EP 2 257 753 B1

FIG. 2

FIG. 3

FIG. 4

FIG. 5

**EP 2 257 753 B1**

## RÉFÉRENCES CITÉES DANS LA DESCRIPTION

**Documents brevets cités dans la description**

- US 4859175 A
- WO 9119147 A
- US 6339 A
- US 729 A
- US 6436335 B
- CA 2550880
- EP 1070224 B